# EUROPEAN PATENT APPLICATION

(11) **EP 4 268 764 A1**
(43) Date of publication of application: **01.11.2023**
(21) Application number: 21911154.9
(22) Date of filing: 16.06.2021
(51) Int. Cl.: A61C 9/00, B05C 17/005, B05C 17/01, A61C 5/64

(54) **DENTAL-IMPRESSION-MATERIAL ELECTRIC DISPENSER**

(30) Priority: 22.12.2020 KR 20200180424
(71) Applicant: Yun, Mun Gyu, Daegu 42610 (KR); Yun, Seok Hun, Daegu 42918 (KR)
(72) Inventor: Yun, Mun Gyu, Daegu 42610 (KR); Yun, Seok Hun, Daegu 42918 (KR)
(74) Representative: Milli, Simone
(86) International application number: PCT/KR2021/007538
(87) International publication number: WO 2022/139084

(57) **Abstract**

A dental-impression-material electric dispenser comprises: a main body having a longitudinal mounting portion formed therein; a top-open tray part in which, at the front end thereof, extrusion ports communicating with a mixing tip part communicate with each other, and an impression material cartridge, having partitioned therein a first filling chamber and a second filling chamber, is mounted; the mixing tip part which communicates with a pair of extrusion ports formed at the front end of the impression material cartridge, and stirs and discharges a silicone base and a curing agent, each being discharged in a fixed amount through the pair of extrusion ports; an extrusion rod part which simultaneously presses a pair of pistons of the impression material cartridge mounted on the tray part through a pair of pressing ends; and an electric extrusion part which receives starting current from a battery cell and allows the extrusion rod part to advance forward through electrical driving.

## Description

### TECHNICAL FIELD

The present invention relates to an electric dispenser for dispensing a dental impression material, and more particularly, to an electric dispenser for dispensing a dental impression material in which a cartridge filled with a silicone base and a curing agent are mounted such that the filled base and the curing agent are stirred-mixed and discharged while being extruded in a fixed amount.

### BACKGROUND ART

In dental treatment, the process of taking an impression of teeth is a process of making negative shapes for replicas of oral tissues when there are defects in the teeth, or the like, and is a process in which the impression material is injected into a tray fixed to the teeth, and after a certain period of time, the impression material is hardened (cured) to obtain the shape of the teeth.

The impression material is hardened (cured) in the same shape as the teeth in a state accommodated in the tray for impression of the teeth, and provides a negative shape of an internal impression structure of an oral cavity of the dental patient. Based on the negative shape provided in this way, artificial teeth or parts of the teeth are manufactured.

Specifically, in the process of taking the impression of teeth, the impression material (liquid silicone base and curing agent) having non-solidified fluidity is put into the oral cavity, and the patient bites the impression material to maintain pressure, waits for the impression material to be hardened, and then pulls out the tray when the impression material is hardened, thereby completing the impression of teeth.

Since the impression material, which is a mixture of a silicone base and a curing agent, start to cure when the liquid silicone base and the curing agent are mixed, a cartridge consists of a pair of cylinders in which the liquid silicone base and the curing agent are separately stored and mixed through a mixing tip connected to the cartridge, and the mixed impression material are injected into a target point in the oral cavity of the patient via an oral tip.

However, since taking an impression is a basis for manufacturing artificial teeth or parts of teeth, very high precision is required, and in order to take such a precise impression, the injection process of the impression material also requires very skilled work techniques.

Meanwhile, the silicone base and the curing agent constituting the dental impression material are separately filled into an impression agent cartridge having a first extrusion cylinder for filling the silicone base in a fixed amount and a second extrusion cylinder for filling the curing agent which is mixed with the silicone base to promote curing of the silicone base, such that the silicone base and curing agent are extruded and stirred to be discharged into the oral cavity during the impression process.

The dispenser for discharging the impression material accommodated in the impression material cartridge includes a manual type manually operated by a user and an automatic type that automatically discharges a predetermined amount by electric power of a driving source.

In addition, in relation to the present invention, the dispenser of the automatic type has been disclosed in US Patent Publication No. US20040182882.

Accordingly, in the process of discharging the impression material from the dispenser to take an impression of teeth in dentistry and moving them to the patient's place, there is a case in which the impression material is already cured and may not be used.

### DISCLOSURE

### TECHNICAL PROBLEM

In order to solve the above problems, the object of the present invention is to provide an electric dispenser for dispensing a dental impression material in which a cartridge filled with a silicone base and a curing agent are mounded, such that the filled base and the curing agent are simultaneously extruded in a fixed amount through electrical driving, and the extruded silicone base and the curing agent are stirred through electrical driving to continuously discharge and supply a fixed amount of the impression material in which fixed amounts of the silicone base and the curing agent are uniformly stirred and mixed.

### TECHNICAL SOLUTION

The above object is achieved by a configuration provided by the present invention and the configuration is as follows.

According to the present invention, an electric dispenser for dispensing a dental impression material may include:
a main body having a longitudinal mounting portion formed therein;
a top-open tray part formed on the longitudinal mounting portion of the main body in a longitudinal direction, in which, at the front end thereof, extrusion ports communicating with a mixing tip part communicate with each other, and an impression material cartridge, having partitioned therein a first filling chamber and a second filling chamber, is mounted;
the mixing tip part assembled in front of the tray part and communicates with a pair of extrusion ports formed at the front end of the impression material cartridge, and stirs and discharges a silicone base and a curing agent, each being discharged through the pair of extrusion ports in a fixed amount;
an extrusion rod part disposed on the longitudinal mounting portion of the main body in an advancing and retreating structure and simultaneously presses a pair of pistons of the impression material cartridge mounted on the tray part through a pair of pressing ends; and
an electric extrusion part installed in the main body and receives a starting current stored in a battery cell and allows the extrusion rod part to advance forward through electrical driving.

Preferably, the electric extrusion part may include an extrusion motor having a rotating shaft that rotates by receiving the starting current from the battery cell; and an operating gear engaged with the rotating shaft of the extrusion motor and rotates in the forward and backward directions.

The extrusion rod part may include a pair of extrusion rods having a pressing end formed at an end thereof, and an advancing and retreating guide having advancing and retreating paths is disposed in the longitudinal mounting portion, wherein the extrusion rods are configured to advance and retreat in the longitudinal direction along the advancing and retreating paths formed in the advancing and retreating guide, respectively, while the extruded rods are formed with a rack gear engaged with the operating gear of the electric extrusion part.

More preferably, the operating gear of the electric extrusion part and a clutch structure to set an engaged state of the operating gear and the rack gear are formed between the electric extrusion part and the extrusion rod part.

In addition, the advancing and retreating paths of the advancing and retreating guide may be made relatively higher than the height of the extrusion rod, such that the extrusion rod installed in the advancing and retreating paths in the advancing and retreating structure is configured to be moved up and down by an upper or lower gap formed by a height deviation with respect to the advancing and retreating path.

A pressure clutch lever may be formed on the longitudinal mounting portion, wherein a lifting state of the extrusion rod is set through the pressure of the extrusion rod, such that an engaged state between the rack gear of the extrusion rod and the operating gear of the electric extrusion part disposed below the extrusion rod is set.

Further, the electric dispenser may be configured to further include a charging cradle for lifting-supporting the main body and having a charging terminal for applying a current to the battery cell installed in the main body.

Further, the mixing tip part includes a pair of inlet ports communicating with a pair of extrusion ports formed in the impression material cartridge, a merging path through which the silicon base and the curing agent injected through the pair of inlet ports are induced and merged, and a mixing screw unit that communicates with the merging path to mix and discharge the merged silicon base and curing agent

The mixing screw unit includes a mixing cylinder communicating with the merging path, and a mixing screw disposed and rotated in the mixing cylinder in the longitudinal direction

The main body is provided with an electric mixing part including a mixing motor in which a rotating shaft rotates in one direction by receiving a starting current charged in a battery cell by operating a switch.

A polygonal fitting stage is formed at an end of the rotating shaft of the mixing motor, and a polygonal fitting socket in which the polygonal fitting stage formed on the rotating shaft of the mixing motor is inserted and fitted is formed at the end of the mixing screw constituting the mixing tip.

### ADVANTAGEOUS EFFECTS

As described above, the present invention provides an electric dispenser for dispensing a dental impression material in which a cartridge filled with a silicone base and a curing agent are mounded, such that the filled base and the curing agent are simultaneously extruded in a fixed amount through electrical driving, and the extruded silicone base and the curing agent are stirred through electrical driving to continuously discharge and supply a fixed amount of the impression material in which a fixed amount of the silicone base and the curing agent are uniformly stirred and mixed.

Therefore, according to the present invention, it is possible to reduce fatigue caused by extruding the silicone base and the curing agent filled in the impression material cartridge in a fixed amount. In addition, it is possible to form a high-quality impression material in which the silicone base and the curing agent extruded in a fixed amount are uniformly mixed in a short time.

In particular, according to the present invention, a unique clutch structure is formed between the extrusion rod part and the electric extrusion part advancing to the extrusion rod part through electrical driving such that the extrusion rod part that extruded the silicone base and the curing agent is more rapidly retracted. Accordingly, it has a peculiarity that the time required for taking an impression in the oral cavity through the impression material is shortened through a rapid exchange of the impression material cartridge.

### BRIEF DESCRIPTION OF THE DRAWINGS

FIGS. 1 to 3 are views illustrating disassembled and assembled states to show the overall configuration of an electric dispenser for dispensing a dental impression material proposed as a preferred embodiment in the present invention;
FIGS. 4 and 5 are cross-sectional views illustrating the operating states of an electric dispenser for dispensing a dental impression material proposed as a preferred embodiment in the present invention;
FIG. 6 is a view illustrating the detailed configuration of an extrusion rod part and an electric extrusion part in an electric dispenser for dispensing a dental impression material proposed as a preferred embodiment in the present invention;
FIG. 7 is a view illustrating the detailed configuration of an extrusion rod part and an electric extrusion part through a clutch structure in an electric dispenser for dispensing a dental impression material proposed as a preferred embodiment of the present invention; and
FIG. 8 is a view illustrating the detailed configuration and assembled state of a mixing tip part in an electric dispenser for dispensing a dental impression material proposed as a preferred embodiment of the present invention.

### BEST MODE

Hereinafter, an electric dental impression material dispenser proposed as a preferred embodiment of the present invention will be described in detail with reference to the accompanying drawings.

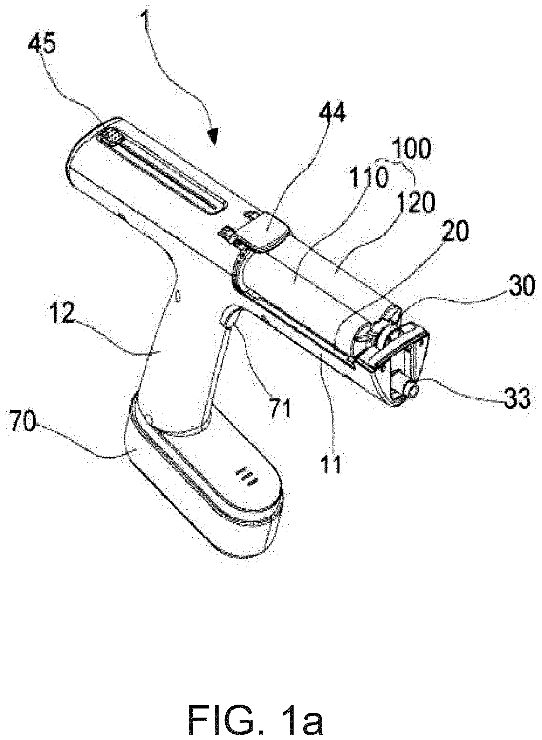

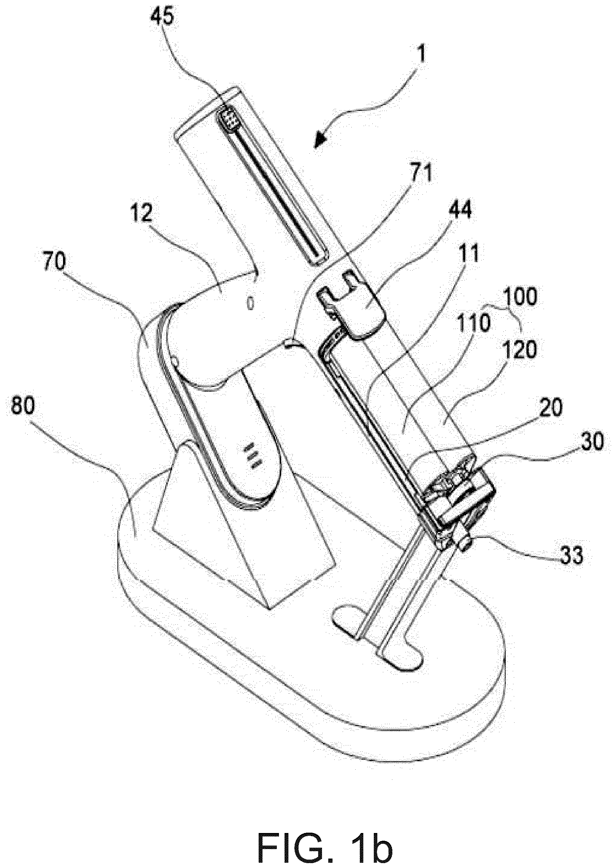

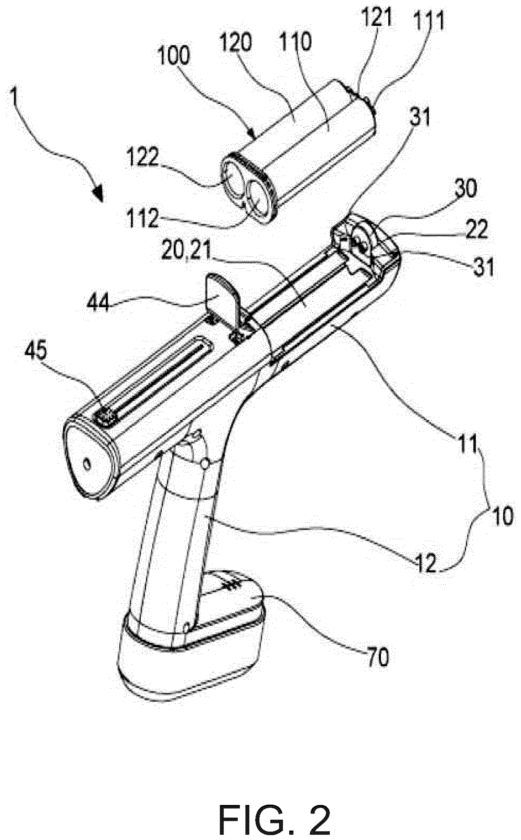

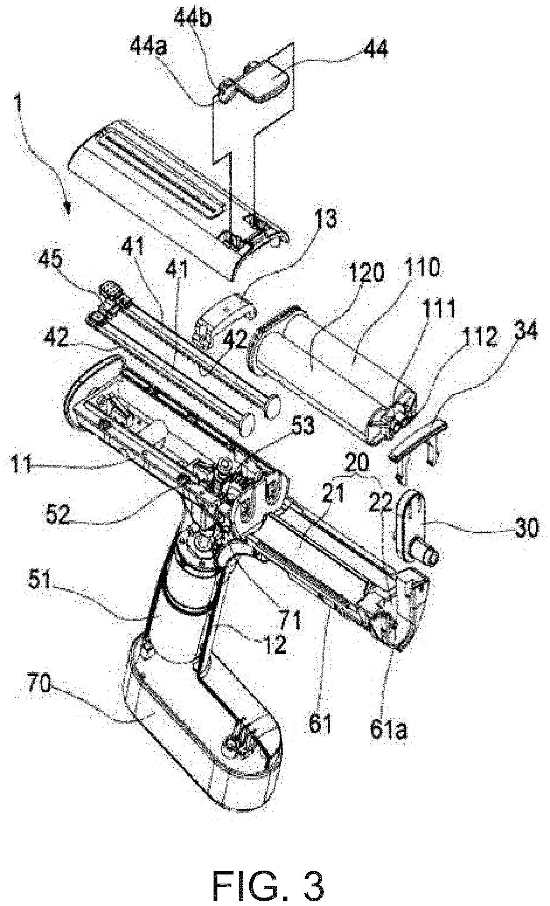

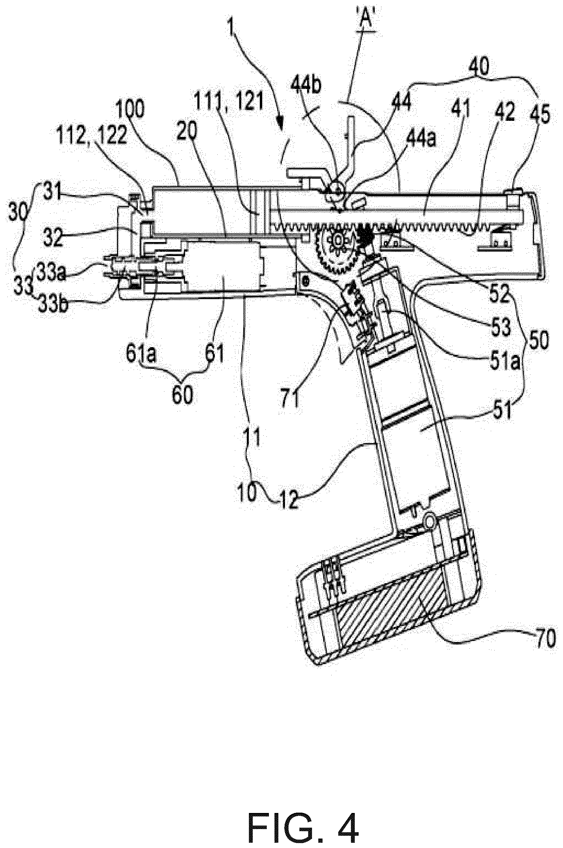

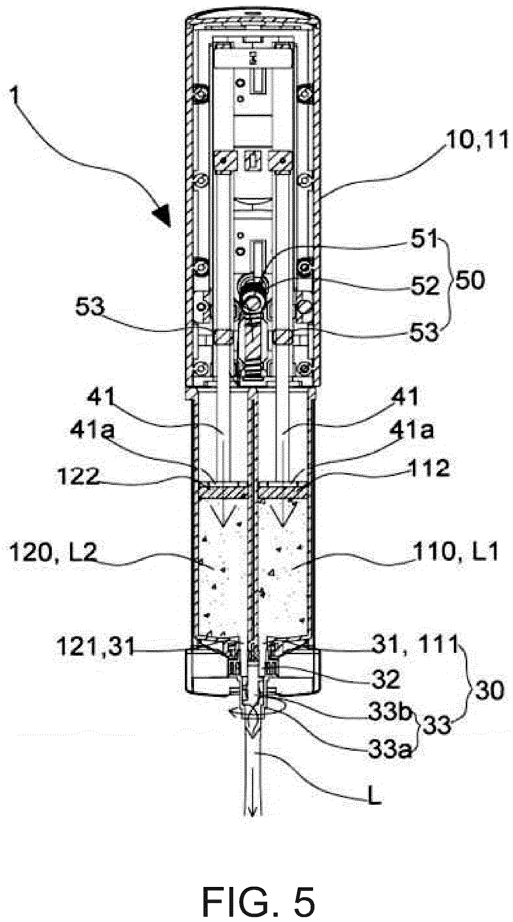

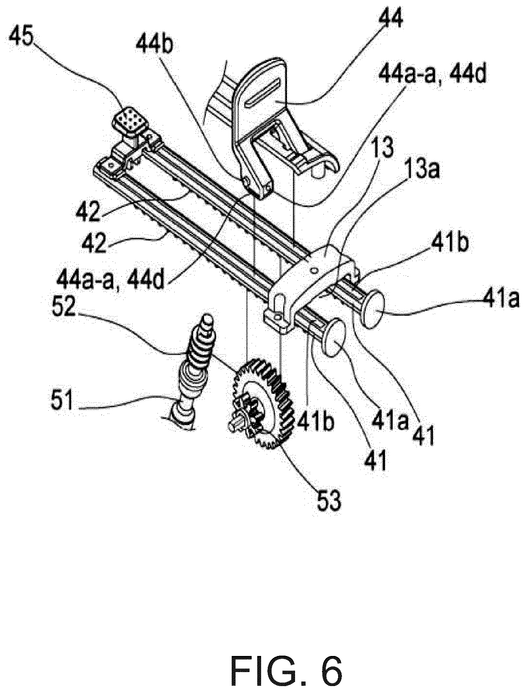

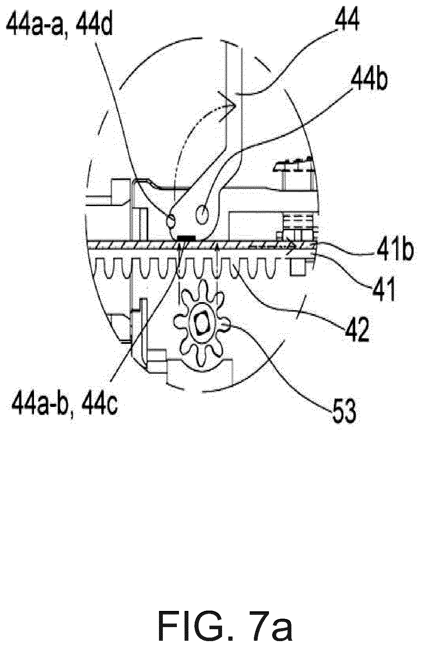

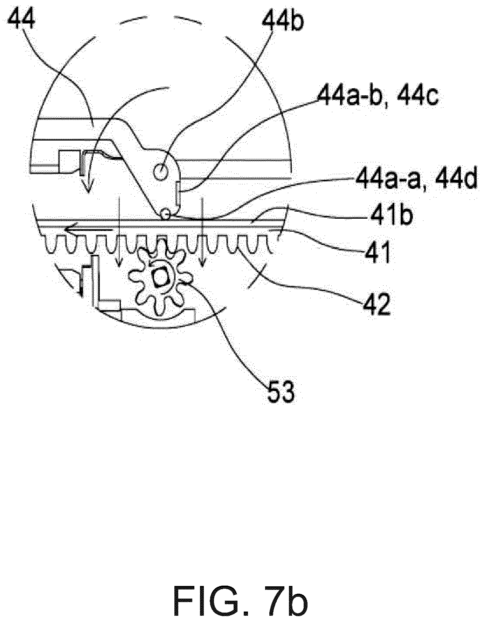

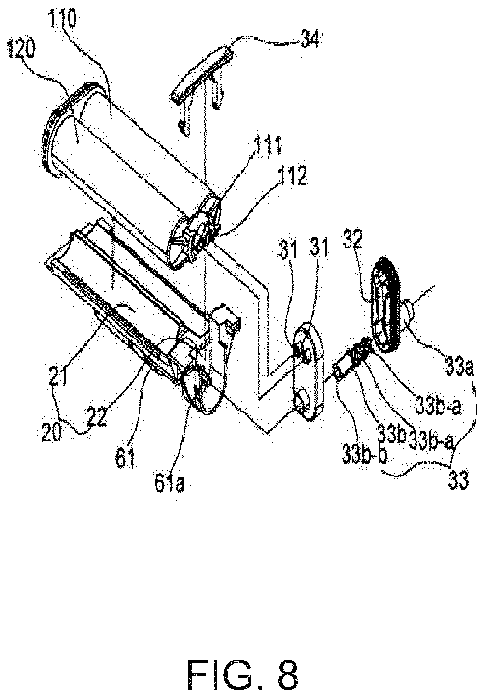

FIGS. 1 to 3 are views illustrating disassembled and assembled states to show the overall configuration of an electric dispenser for dispensing a dental impression material proposed as a preferred embodiment in the present invention; FIGS. 4 and 5 are cross-sectional views illustrating the operating states of an electric dispenser for dispensing a dental impression material proposed as a preferred embodiment in the present invention; FIG. 6 is a view illustrating the detailed configuration of an extrusion rod part and an electric extrusion part in an electric dispenser for dispensing a dental impression material proposed as a preferred embodiment in the present invention; FIG. 7 is a view illustrating the detailed configuration of an extrusion rod part and an electric extrusion part through a clutch structure in an electric dispenser for dispensing a dental impression material proposed as a preferred embodiment of the present invention; and FIG. 8 is a view illustrating the detailed configuration and assembled state of a mixing tip part in an electric dispenser for dispensing a dental impression material proposed as a preferred embodiment of the present invention.

In a preferred embodiment of the present invention, an electric dispenser 1 for dispensing a dental impression material is a device dedicated for dentistry and includes an impression material cartridge 100 in which a silicon base L1 and a curing agent L2 are separately filled, such that the silicone base L1 and the curing agent L2 filled in the impression material cartridge 100 may be mixed and discharged through electrical driving in a fixed amount.

The electric dispenser 1 for dispensing a dental impression material includes a main body 10 having a longitudinal mounting portion 11 formed therein; a top-open tray part 20 formed on the longitudinal mounting portion 11 of the main body 10 in a longitudinal direction, in which, at the front end thereof, extrusion ports 111 communicating with a mixing tip part 30 communicate with each other, and an impression material cartridge 100, having partitioned therein a first filling chamber 110 and a second filling chamber 120, is mounted; and the mixing tip part 30 assembled in front of the tray part 20 and communicates with a pair of extrusion ports formed at the front end of the impression material cartridge 100, and stirs and discharges a silicone base L1 and a curing agent L2, each being discharged through the pair of extrusion ports in a fixed amount, as shown in FIGS. 1 to 5.

In this embodiment, the main body 10 is configured in a gun shape in which a grip arm part 12 gripped by the user is inclined at the lower portion of the latter half of the longitudinal mounting portion 11, such that ease of operation may be ensured along with convenience in the user's grip.

In addition, the present invention further includes a charging cradle 80 for lifting-supporting the gun-shaped main body 10 and charging the battery cells 70 installed in the gun-shaped main body 10 by applying a current.

In particular, in this embodiment, the charging cradle 80 is provided with a charging terminal corresponding to the charging terminal of the battery cell 70 installed in the grip arm part 12 of the gun-shaped main body 10, such that the battery cell 70 is automatically charged when the user places the gun-shaped main body 10 on the charging cradle 80.

In addition, the tray part 20 is formed with a cartridge mounting slot 21 in which the impression material cartridge 100 is seated, and a mixing tip part mounting slot 22 formed in front of the cartridge mounting slot 21 to mount the mixing tip part 30 thereon.

In the present invention, an electric extrusion structure in which the impression material cartridge 100 mounted on the tray part 20 is extruded at a constant speed through electric driving to extrude the silicone base L1 and the curing agent L2 separately filled in the impression material cartridge 100 in a fixed amount, and an electric mixing structure that mixes and discharges the silicone base L1 and the curing agent L2 extruded in a fixed amount are provided, such that the user who grips the gun-shaped main body 10 through the grip arm 12 may extrude the impression material L in which the silicon base L1 and the curing agent L2 are mixed in a fixed amount by operating the switch 71 to easily take an impression through the impression material.

The electric extrusion structure includes an extrusion rod part 40 disposed on the longitudinal mounting portion 11 of the main body 10 in an advancing and retreating structure and simultaneously presses a pair of pistons 112 and 122 of the impression material cartridge 100 mounted on the tray part 20 through a pair of pressing ends 41a, and an electric extrusion part 50 installed in the main body 10 and receives a starting current stored in a battery cell 70 and allows the extrusion rod part 40 to advance forward through electrical driving.

The extrusion rod part 40 includes a pair of extrusion rods 41 having a pressing end 41a formed at an end thereof, and in this embodiment, as shown in FIG. 6, an advancing and retreating guide 13 formed with advancing and retreating paths 13a is disposed in the longitudinal mounting portion 11 to allow the extrusion rods 41 constituting the extrusion rod part 40 to be advanced and retreated in the longitudinal direction along the advancing and retreating paths 13a formed in the advancing and retreating guide, respectively.

Further, the electric extrusion part 50 includes an extrusion motor 51 having a rotating shaft 51a that rotates by receiving the starting current from the battery cell 70, and an operating gear 53 engaged with the rotating shaft 51a of the extrusion motor 51 and rotates in the forward and backward directions.

In this embodiment, the extrusion motor 51 constituting the electric extrusion part 50 is installed upright on the grip arm part 12 of the gun-shaped main body 10, and a worm gear 52 is engaged between the rotating shaft 51a of the extrusion motor 51 and the operating gear 53 disposed on the longitudinal mounting portion 11 in a pivoting structure.

Further, the extrusion rod part 40 installed on the longitudinal mounting portion 11 in the advancing and retreating structure is formed with a rack gear 42 engaged with the operating gear 53 of the electric extrusion part 50, such that the rotational force provided from an extrusion motor 51 is converted into a straight feed force to be advanced along the longitudinal mounting portion 11 in the longitudinal direction.

Therefore, each of the pistons 112 and 122 of the impression material cartridge 100 mounted on the tray part 20 is simultaneously pressed and advanced by a pressure end 41a of the extrusion rod part 40 that is advanced in the longitudinal direction by the rotational force of the electric extrusion part 50, while the silicone base L1 and the curing agent L2 filled in the first filling chamber 110 and the second filling chamber 120 are extruded and discharged to the mixing tip part 30 assembled at the front end in a fixed amount.

Thus, when the user who grips the grip arm part 12 of the gun-shaped main body 10 to which the impression material cartridge 100 is mounted presses the switch 71 formed on the front of the grip arm part 12, the starting current stored in the battery cell 70 is applied to the extrusion motor 51 of the electric extrusion part 50, and the extrusion rod part 40 is advanced along the longitudinal mounting portion 11 in the longitudinal direction by driving the extrusion motor 51, and the pistons 122 of the impression material cartridge 100 are collectively advanced through the pressure end 41a, such that the silicon base L1 and the curing agent L2 filled in the impression material cartridge 100 are extruded in a fixed amount.

Therefore, in the extrusion process that requires a continuous strong extrusion force, it has a specificity that may promote stable extrusion of the silicon base L1 and the curing agent L2 through electrical driving.

Further, when both the silicon base L1 and the curing agent L2 in the impression material cartridge 100 are extruded and exhausted by the electric extrusion part 50, the extrusion rod part 40, which enters the first filling chamber 110 and the second filling chamber 120 of the impression material cartridge 100 and presses the pistons 112 forward, is retracted to its original position, and then the exchange of the used impression material cartridge 100 is performed.

However, due to the nature of the impression material, since the curing agent is mixed, the impression material is required to be supplied within a short time in a fixed amount, and if it is delayed, the first extruded impression material is cured, and there is a limitation that it is difficult to obtain the required impression.

This limitation is especially true when the impression is acquired by extruding the impression material from multiple impression material cartridges.

Therefore, after the extrusion of the impression material is completed, the time required to extrude the exchanged impression material by exchanging a new impression material cartridge is more important than anything else.

In consideration of this, in the present invention, the extrusion rod part 40, which is advanced by the driving of the electric extrusion part 50 and extrudes the silicon base L1 and the curing agent L2, is configured to retreat more quickly, such that the time required for taking an impression in the oral cavity through the impression material L is shortened by quickly exchanging the impression material cartridge 100.

More specifically, in this embodiment, a unique clutch structure is provided between the electric extrusion part 50 and the extrusion rod part 40 that is advanced forward by receiving a forward force from the electric extrusion part 50 to establish their connection state, and thus the extrusion rod part 40 advanced forward by the electric extrusion part 50 through electrical driving is retracted through a manual manipulation in a short time to be returned to its original position, such that the time required for the extrusion rod part 40 to be retreated and returned to its original position is shortened.

To this end, in this embodiment, as shown in FIGS. 4 and 6 to 7, the advancing and retreating path 13a of the advancing and retreating guide 13 may be made relatively higher than the height of the extrusion rod 41, such that the extrusion rod 41 is configured to be moved up and down by an upper or lower gap formed by a height deviation between the advancing and retreating path 13a and the extrusion rod 41.

Further, a pressure clutch lever 44 is formed on the longitudinal mounting portion 11, such that the extrusion rod part 40, which has been raised along the upper or lower gap, is vertically pressed, and thus the operating gear 53 of the electric extrusion part 50 and the rack gears 42 of the extrusion rod part 40, which are spaced up and down, may be mutually engaged and connected.

Preferably, the pressure clutch lever 44 is configured in a form in which a cam-type lever body having an eccentric pressure end 44a is disposed in a vertical and pivotal structure through a rotating shaft 44b.

More preferably, a ferromagnetic sheet 41b is disposed on the upper surface of the extrusion rods 41 constituting the extrusion rod part 40, a rolling steel ball 44d is disposed on a pressing surface 44a-a of the eccentric pressing end 44a of the clutch lever 44, and a permanent magnet 44c is disposed on a pressure release surface 44a-b.

Therefore, when the pressure clutch lever 44 is turned around the rotating shaft 44b and stands up, the pressing state of the extrusion rod 41 by the eccentric pressure end 44a is released, and when the pressure clutch lever 44 is laid horizontally around the rotating shaft 44b, the extrusion rod part 40 is pressed through the eccentric pressure end 44a such that the extrusion rod part 40 and the operating gear 53 are mutually engaged.

In this case, as shown in FIG. 7A, when the pressure clutch lever 44 pivots upward around the rotating shaft 44b, the extrusion rod 41 on which the ferromagnetic sheet 41b is formed may be lifted by the magnetic coupling force of the permanent magnet formed on the pressure release surface 44a-b of the eccentric pressure end 44a to release the state engaged with the operating gear 53.

Further, as shown in FIG. 7B, when the pressure clutch lever 44 pivots downward around the rotating shaft 44b, the extrusion rod 41 is pressed in a state of rolling friction by the rolling steel ball 44d formed on the pressure release surface 44a-b of the eccentric pressure end 44a to form a stable engagement state with the operating gear 53. In this case, since the occurrence of friction with the pressure clutch lever 44 is suppressed in the process of advancing the extrusion rod 41 by rolling friction caused by the rolling steel balls 44d, the extrusion rod 41 is advanced smoothly.

As a result, the extrusion rod part 40 is engaged with the operating gear 53 of the electric extrusion part 50 when the pressure of the pressure clutch lever 44 is made, and thus the pistons 112 and 122 formed in the impression material cartridge 100 are simultaneously pressed by an advance force provided from the electric extrusion part 50. Therefore, the silicon base L1 and the curing agent L2 filled in the impression material cartridge 100 may be extruded in a fixed amount.

In addition, after finishing the extrusion of the silicone base L1 and the curing agent L2 in a fixed amount, the user stands up the pressure clutch lever 44 around the rotating shaft 44b to release the pressure of the extrusion rod part 40 by the pressure clutch lever 44 and thus the engagement state between the operating gear 53 and the extrusion rod part 40 is released. In this state, it is possible to quickly retreat the extrusion rod part 40 that has advanced through manual manipulation, and as a result, the extrusion rod part 40 for exchanging the impression material cartridge 100 may be rapidly retreated.

Meanwhile, the mixing tip part 30 for mixing the silicone base L1 and the curing agent 12 extruded from the extrusion ports 111 and 121 of the impression material cartridge 100 includes a pair of inlet ports 31 connected with a pair of extrusion ports 111 and 121 formed in the impression material cartridge 100, a merging path through which the silicon base L1 and the curing agent L2 injected through the pair of inlet ports 31 are induced and merged, and a mixing screw unit 33 that communicates with the merging path to mix and discharge the merged silicon base and curing agent,

Further, as shown in FIG. 8, the mixing screw unit 33 includes a mixing cylinder 33a communicating with the merging path 32; and a mixing screw 33b disposed and rotated in the mixing cylinder 33a in the longitudinal direction, and the mixing screw 33b is configured in a form in which a plurality of mixing blades 33b-a is disposed.

In this embodiment, the gun-shaped main body 10 is additionally formed with an electric mixing part 60 connected to the mixing screw 33b to provide rotational force to the mixing screw 33b, and thus the silicone base L1 and the curing agent L2 extruded into the mixing screw unit 33 through the electric extrusion part 50 are more uniformly stirred in a short time by the mixing screw 33b rotated through electrical driving, such that the silicone base L1 and the curing agent L2 is extruded in a uniformly mixed form.

The electric mixing part 60 includes a mixing motor 61 in which a rotating shaft 61a rotates in one direction by receiving a starting current charged in the battery cell 70 by operating a switch 71.

In this embodiment, a polygonal fitting stage is formed at an end of the rotating shaft 61a, and a polygonal fitting socket 33b-b is formed at the end of the mixing screw 33b constituting the mixing tip 30, wherein the polygonal fitting stage formed on the rotating shaft 61a of the mixing motor is inserted and fitted.

Therefore, in a state in which the rotating shaft 61a of the mixing motor 61 constituting the electric mixing part 60 is fitted and assembled, the mixing tip part 30 is assembled in a state where the extrusion port 121 and the inlet port 31 of the impression material cartridge 100 mounted on a tray part 20 are communicated with each other.

Next, when the starting current charged in the battery cell 70 is simultaneously supplied to the electric extrusion part 50 and the electric mixing part 60 by the operation of the switch 71, each of pistons 112 and 122 of the impression material cartridge 100 installed in the tray unit 20 is collectively advanced forward by the extrusion rod part 40, such that the silicon base L1 and the curing agent L2 filled in the impression material cartridge 100 are extruded through the extrusion ports 111 and 121 in a fixed amount.

Further, the silicone base L1 and the curing agent L2 extruded in the fixed amount are merged while passing through the merging path 32 of the mixing tip part 30, and then mixed and discharged along the mixing screw unit 33.

In this case, the mixing screw 33b constituting the mixing screw unit 33 is rotated in one direction by the driving of the mixing motor 61 constituting the electric mixing part 60. As a result, the silicone base L1 and the curing agent L2 discharged along the mixing cylinder 33a of the mixing screw unit 33 are mixed at a uniform density while passing a short distance to form and discharge a high-quality impression material.

### INDUSTRIAL APPLICABILITY

By providing an electric dispenser for dispensing a dental impression material in which fixed amounts of silicone base and curing agent are uniformly stirred-mixed to continuously discharge and supply a fixed amount of impression material, it is possible to reduce fatigue caused by extruding the silicone base and the curing agent filled in the impression material cartridge in a fixed amount. In addition, it is possible to form a high-quality impression material in which the silicone base and the curing agent extruded in a fixed amount are uniformly mixed in a short time.

## Claims

1. An electric dispenser for dispensing a dental impression material, comprises:
a main body having a longitudinal mounting portion formed therein;
a top-open tray part formed on the longitudinal mounting portion of the main body in a longitudinal direction, in which, at the front end thereof, extrusion ports communicating with a mixing tip part communicate with each other, and an impression material cartridge, having partitioned therein a first filling chamber and a second filling chamber, is mounted;
the mixing tip part assembled in front of the top-open tray part and communicates with a pair of extrusion ports formed at the front end of the impression material cartridge, and stirs and discharges a silicone base and a curing agent, each being discharged through the pair of extrusion ports in a fixed amount;
an extrusion rod part disposed on the longitudinal mounting portion of the main body in an advancing and retreating structure and simultaneously presses a pair of pistons of the impression material cartridge mounted on the tray part through a pair of pressing ends; and
an electric extrusion part installed in the main body and receives a starting current from a battery cell and allows the extrusion rod part to advance forward through electrical driving.

2. The electric dispenser according to claim 1, wherein the electric extrusion part includes an extrusion motor having a rotating shaft that rotates by receiving the starting current from the battery cell; and an operating gear engaged with the rotating shaft of the extrusion motor and rotates in the forward and backward directions, the extrusion rod part includes a pair of extrusion rods having a pressing end formed at an end thereof, and an advancing and retreating guide having advancing and retreating paths is disposed in the longitudinal mounting portion to allow the extrusion rods to be advanced and retreated in the longitudinal direction along the advancing and retreating paths formed in the advancing and retreating guide, respectively, while the extruded rods are formed with a rack gear engaged with the operating gear of the electric extrusion part.

3. The electric dispenser according to claim 2, wherein the operating gear of the electric extrusion part and a clutch structure to set an engaged state of the operating gear and the rack gear are formed between the electric extrusion part and the extrusion rod part.

4. The electric dispenser according to claim 3, wherein the advancing and retreating paths of the advancing and retreating guide are made relatively higher than the height of the extrusion rod, such that the extrusion rod installed in the advancing and retreating paths in the advancing and retreating structure is configured to be moved up and down by an upper or lower gap formed by a height deviation with respect to the advancing and retreating path, and a pressure clutch lever is formed on the longitudinal mounting portion, wherein a lifting state of the extrusion rod is set through the pressure of the extrusion rod, such that an engaged state between the rack gear of the extrusion rod and the operating gear of the electric extrusion part disposed below the extrusion rod is set.

5. The electric dispenser according to claim 1, further comprising:
a charging cradle for lifting-supporting the main body and having a charging terminal for applying a current to the battery cell installed in the main body.
